(19) Europäisches Patentamt
European Patent Office
Office européen des brevets

(11) **EP 2 811 621 A2**

(12) **EUROPEAN PATENT APPLICATION**

(43) Date of publication:
**10.12.2014  Bulletin 2014/50**

(51) Int Cl.:
***H02K 3/16*** (2006.01)

(21) Application number: **14170806.5**

(22) Date of filing: **02.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.06.2013  US 201313908319**

(71) Applicant: **Hamilton Sundstrand Corporation Charlotte, NC 28217 (US)**

(72) Inventors:
• **Gieras, Jacek F.**
  **Glastonbury, CT Connecticut 06033 (US)**
• **Rozman, Gregory I.**
  **Rockford, IL Illinois 61114 (US)**

(74) Representative: **Hall, Matthew Benjamin**
  **Dehns**
  **St. Bride's House**
  **10 Salisbury Square**
  **London EC4Y 8JD (GB)**

(54) **Reduction of leakage flux in electrical machines**

(57)     An electrical machine (100) includes an armature (102) defining a winding slot (104; 404; 604) that houses a winding (106; 406; 606). A slot opening (108; 608) connects into the winding slot (104; 404; 604). A flux repeller (110; 210; 310; 410; 510; 610) is disposed in the slot opening (104; 404; 604) to reduce slot leakage flux. In certain embodiments the armature (102) is a stationary armature (102) defining a plurality of winding slots (104; 404; 604), each winding slot (104; 404; 604) housing a winding (106; 406; 606). A rotor (112; 612) is disposed radially apart from the stationary armature (102) with a radial gap (114; 614) defined between the armature (102) and rotor core (112; 612). Each winding slot (104; 404; 604) has a slot opening (108; 608) that connects the winding slot (104; 404; 604) to the gap (114; 614). A plurality of flux repellers (110; 210; 310; 410; 510; 610) is included as described above, with a respective one of the flux repellers (110; 210; 310; 410; 510; 610) disposed in each respective slot (104; 404; 604) opening to reduce slot leakage flux.

**Fig. 9**

## Description

The present invention relates to electrical machines, and more particularly to electrical machines with armature windings such as electrical motors and generators.

The leakage flux of AC electrical machines increases the leakage inductance and deteriorates both the steady-state and dynamic performance of electrical machines. The leakage flux in AC electrical machines has four components:

- slot leakage flux;
- end turn leakage flux;
- differential leakage flux due to higher harmonics; and
- tooth-top leakage flux (between the heads of teeth).

While the conventional methods and systems have generally been considered satisfactory for their intended purpose, there is an ongoing need in the art for electrical machines that allow for improved power factor and efficiency. There also remains a need in the art for such systems and methods that are easy to make and use. At least the preferred embodiments of the present invention provide a solution for these problems.

A new and useful electrical machine includes an armature defining a winding slot that houses a winding. A slot opening connects into the winding slot. A flux repeller is disposed in the slot opening to reduce slot leakage flux.

In certain embodiments the armature is a stationary armature defining a plurality of winding slots, each winding slot housing a winding. A rotor is disposed radially apart from the stationary armature with a radial gap defined between the armature and rotor. Each winding slot has a slot opening that connects the winding slot to the gap. A plurality of flux repellers is included as described above, with a respective one of the flux repellers disposed in each respective slot opening to reduce slot leakage flux.

The flux repeller can include a single-turn short circuit coil, which can have a circular cross-section, rectangular cross-section, or any other suitable cross-section. It is also contemplated that the flux repeller can include a conductive solid bar, for example with a rectangular cross-section. It is further contemplated that the flux repeller can include multiple turns and can include wound conductive tape. The flux repeller can optionally include a core, e.g., a ferromagnetic core or a non-ferromagnetic core.

In a preferred embodiment, an electrical machine includes a stationary armature defining a plurality of winding slots, each winding slot housing a winding; a rotor disposed radially apart from the stationary armature with a radial gap defined between the armature and rotor, wherein each winding slot has a slot opening that connects the winding slot to the gap; and a plurality of flux repellers, with a respective one of the flux repellers disposed in each respective slot opening to reduce slot leakage flux.

These and other features of the systems and methods of the subject invention will become more readily apparent to those skilled in the art from the following detailed description of the preferred embodiments taken in conjunction with the drawings.

So that those skilled in the art to which the subject invention appertains will readily understand how to make and use the devices and methods of the subject invention without undue experimentation, preferred embodiments thereof will be described in detail herein below by way of example only and with reference to certain figures, wherein:

Fig. 1 is a schematic cross-sectional end view of an exemplary embodiment of an electrical machine constructed in accordance with the present invention, showing the stationary armature and rotor core;

Fig. 2 is an enlarged schematic cross-sectional end view of a portion of the electrical machine of Fig. 1, showing the winding housed within the winding slot, and showing the slot opening that connects into the winding slot without a flux repeller disposed therein;

Fig. 3 is a schematic cross-sectional end view of an exemplary embodiment of a flux repeller for use in the slot opening of Fig. 2, showing the circular cross-section of the single-turn short circuit coil;

Fig. 4 is a schematic side view of the flux repeller of Fig. 3, showing the single-turn short circuit coil;

Fig. 5 is a schematic cross-sectional end view of another exemplary embodiment of a flux repeller for use in the slot opening of Fig. 2, showing the rectangular cross-section of the single-turn short circuit coil;

Fig. 6 is a schematic side view of the flux repeller of Fig. 5, showing the single-turn short circuit coil;

Fig. 7 is a schematic cross-sectional end view of another exemplary embodiment of a flux repeller for use in the slot opening of Fig. 2, showing the rectangular cross-section of the conductive solid bar;

Fig. 8 is a schematic side view of the flux repeller of Fig. 7, showing the broad side of the conductive solid bar;

Fig. 9 is as schematic cross-sectional end view of an exemplary embodiment of a winding slot, showing a flux repeller with a single-turn short circuit coil having a rectangular cross-section seated in the slot opening;

Fig. 10 is as schematic cross-sectional end view of an exemplary embodiment of a winding slot, showing a flux repeller with a conductive solid bar having a rectangular cross-section seated in the slot opening;

Fig. 11 is a schematic cross-sectional end view of another exemplary embodiment of a flux repeller, similar to that shown in Fig. 5, showing the magnetic flux produced by the flux repeller in an open space;

Fig. 12 is a schematic cross-sectional end view of another exemplary embodiment of a winding slot, showing the leakage flux when no flux repeller is present; and

Fig. 13 is a schematic cross-sectional end view of the winding slot of Fig. 12, showing the reduced flux leakage with a flux repeller similar to that shown in Fig. 5 is seated in the slot opening.

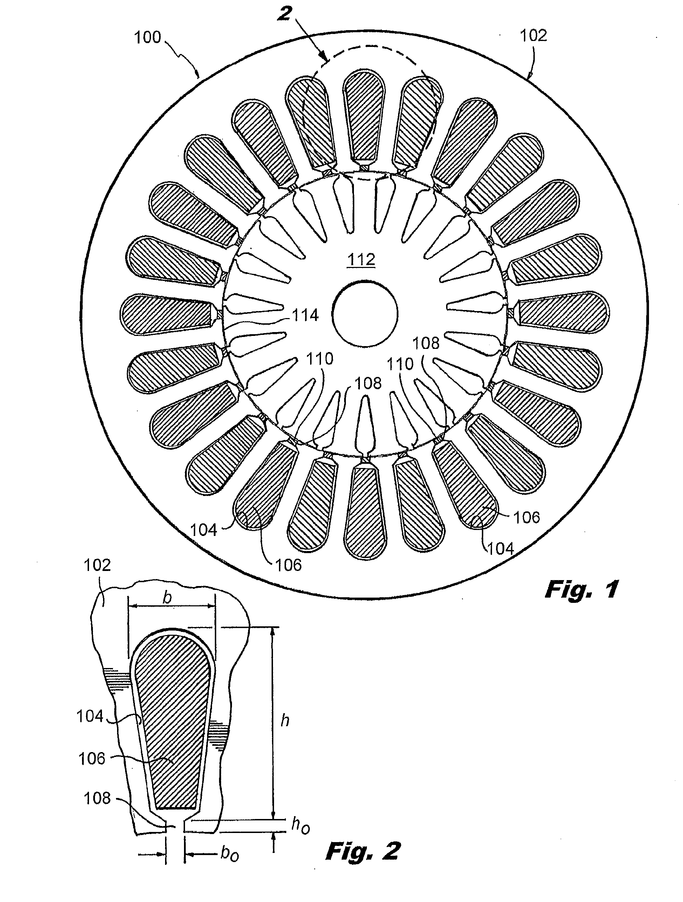

Reference will now be made to the drawings wherein like reference numerals identify similar structural features or aspects of the subject invention. For purposes of explanation and illustration, and not limitation, a partial view of an exemplary embodiment of an electrical machine is shown in Fig. 1 and is designated generally by reference character 100. Other embodiments of electrical machines in accordance with the invention, or aspects thereof, are provided in Figs. 2-13, as will be described. These systems and methods can be used to reduce leakage flux and increase efficiency in electrical machines.

Electrical machine 100 includes a stationary armature 102 defining winding slots 104, only some of which have a reference character in Fig. 1 for sake of clarity. Each winding slot 104 houses a winding 106. A respective slot opening 108 connects into each winding slot 104. A flux repeller 110 is disposed in each slot opening 108 to reduce slot leakage flux. A rotor 112 is disposed radially apart from armature 102 with a radial gap 114, e.g., an air gap, defined between armature 102 and rotor 112. The slot openings 108 connect winding slots 104 to gap 114.

Referring now to Fig. 2, one of the winding slots 104 is shown with its flux repeller 110 removed from slot opening 108. For a simple rectangular slot shown in Fig. 2, the coefficient of slot leakage permeance is:

$$\lambda = \frac{h_o}{b_o} + \frac{h}{3b}$$

If, for example $h_o$ = 1.5 mm, $b_o$ = 3 mm, h = 15 mm and b = 8 mm, the first term $h_o/b_o$ = 1.5/3.0 = 0.5 and the third term is 15/(3 x 8) = 0.625. The first term is not too much less than the second term, so its reduction can significantly decrease the overall slot leakage permeance and slot leakage flux.

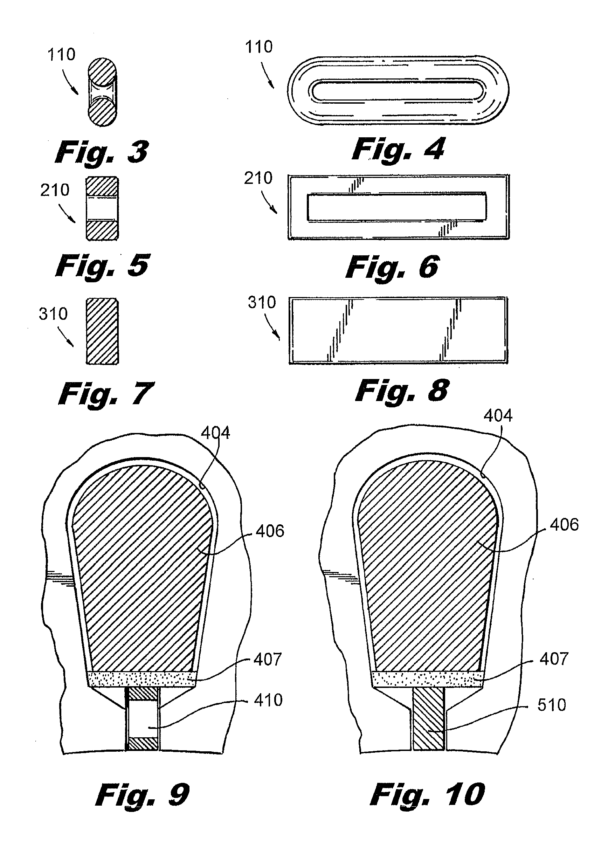

It is possible to reduce the leakage flux in the area of the slot opening ($h_o/b_o$) and also part of tooth-top leakage flux, by repelling this leakage flux from the slot opening zone. This can be done electromagnetically by placing a conductor or electric circuit in the slot opening area, such as flux repellers 110 described above. The flux repellers 110 can be made of high-conductivity metal such as copper or aluminum, for example, or any other suitable material. Examples of flux repellers are shown in Figs. 3-8. The flux repeller can include a single-turn short circuit coil, which can have a circular cross-section, as in flux repeller 110 of Figs. 3 and 4, rectangular cross-section, as in flux repeller 210 of Figs. 5 and 6, or any other suitable cross-section. It is also contemplated that the flux repeller can include a conductive solid bar such as in flux repeller 310 of Figs 7 and 8, which has a rectangular cross-section. Those skilled in the art will readily appreciate that any other suitable cross-sectional shapes can be used without departing from the scope of this invention. While depicted herein with exemplary single-turn flux repellers, it is further contemplated that the flux repellers can include multiple turns and can include wound conductive tape without departing from the scope of this invention. No inter turn insulation is necessary. The flux repeller can optionally include a core, e.g., a ferromagnetic core or a non-ferromagnetic core.

Currents or eddy currents induced in these conductive flux repellers by the leakage flux produce their own magnetic fields that are in opposition to the primary field (the slot leakage flux). This opposed magnetic field repels the leakage flux from the slot opening area.

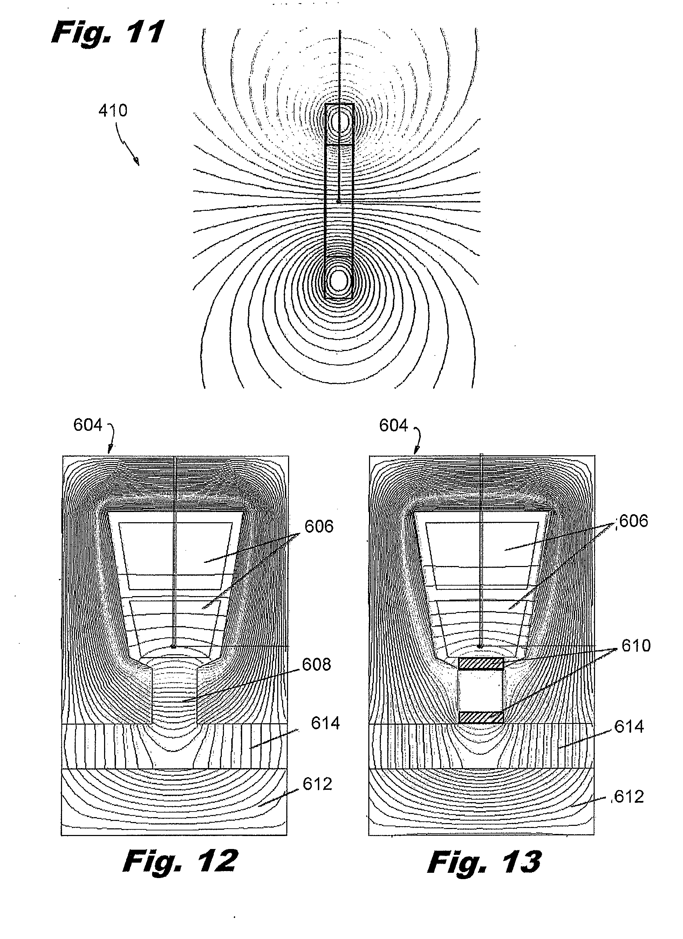

With reference to Fig. 9, a leakage flux repeller 410 made of a copper wire of rectangular cross section, similar to that shown in Fig. 5, is inserted in a slot 404 of an exemplary AC electrical machine. Slot wedge 407 keeps windings 406 in place. A simple leakage flux repeller 510 is shown in Fig. 10 as a solid copper or aluminum bar in the slot opening of slot 404. The currents induced in flux repeller 510 are similar to those induced in flux repeller 410, since the currents will travel primarily around the outer portions of the bar. Thus the repelling magnetic field of flux repeller 510 is similar to that of flux repeller 410. Fig. 11 shows the lines of magnetic flux produced by a flux repeller 410 placed in an open space. Flux repeller 510 may be the most suitable choice in applications that have small slot sizes, for example.

Referring now to Figs. 12 and 13, the effect of slot flux leakage reduction is demonstrated using flux repeller 610 in the slot opening 608 opening into gap 614 for another exemplary winding slot 604 with windings 606 spaced radially apart from a rotor 612. As shown in Fig. 12, without a flux repeller 610, a relatively dense amount of field lines cross slot opening 608. With a flux repeller 610 in place, as shown in Fig. 13, the cross-slot opening flux leakage is eliminated or nearly eliminated, and the useful flux across gap 614 is significantly more dense. Flux repeller 610 in a sense pushes the magnetic flux out of slot opening 608 and out across gap 614. Since more magnetic flux from windings 606 crosses gap 614 to rotor 612, e.g., a ferromagnetic rotor core, the efficiency and power factor of the electrical machine is increased.

While shown and described above in the exemplary context of stationary armatures radially outward from rotor cores, those skilled in the art will readily appreciate that the systems and methods of slot flux reduction can be applied to both stators and rotors of AC electrical machines. The systems and methods described herein can be used in induction, synchronous, brushless permanent magnet and DC brush electrical machines, or in any other suitable application without departing from the spirit of this disclosure. In typical induction, synchronous and brushless permanent magnet machines, the armature winding are on the stator, so the leakage flux repellers can be inserted into stator slots. In induction, synchronous and brushless permanent magnet machines of reversed construction (outside rotor, inside stator), the leakage flux repellers can be inserted into the inner stator slots. In the case of slip ring induction machines, the leakage flux repellers can be installed both on the stator and rotor. In a typical brush electrical machine the armature winding is the rotor winding, so the leakage flux repellers can be installed in rotor slots.

Potential benefits of the systems and methods described herein include simple and effective reduction of leakage flux that does not require any mechanical, or electronic active parts. This represents a practical utilization of Lenz' rule, namely that the induced current will flow in such a direction so as to oppose the cause that produces it. Average reduction of leakage flux in the slot opening zone can be by a factor of about three, depending on the specific configuration used. The systems and methods described herein can offer improvement of steady-state and dynamic performance of AC of electrical machines by slot leakage flux reduction, and the level of leakage flux reduction is dependent on the slot shape, machine design, and leakage flux repeller design. Another potential benefit is that magnetic flux repellers can be installed in existing AC electrical machines without rewinding or alterations to their construction. Additional losses in the leakage flux repeller can be minimized by proper selection of the shape, cross-section, number of shorted turns, and materials of the leakage flux repellers.

The methods and systems of the present invention, as described above and shown in the drawings, provide for electrical machines with superior properties including reduced flux leakage for increased efficiency. While the apparatus and methods of the subject invention have been shown and described with reference to preferred embodiments, those skilled in the art will readily appreciate that changes and/or modifications may be made thereto without departing from the scope of the subject invention as defined by the claims.

## Claims

1. An electrical machine (100) comprising:

   an armature (102) defining a winding slot (104; 404; 604) that houses a winding (106; 406; 606), wherein a slot opening (108; 608) connects into the winding slot; and
   a flux repeller (110; 210; 310; 410; 510; 610) disposed in the slot opening to reduce slot leakage flux.

2. An electrical machine as recited in claim 1, wherein the armature is a stationary armature defining a plurality of winding slots, each winding slot housing a winding, the electrical machine further comprising:

   a rotor (112; 612) disposed radially apart from the stationary armature with a radial gap (114; 614) defined between the armature and rotor, wherein each winding slot has a slot opening that connects the winding slot to the gap; and
   a plurality of flux repellers, with a respective one of the flux repellers disposed in each respective slot opening to reduce slot leakage flux.

3. An electrical machine as recited in claim 1 or 2, wherein the or each flux repeller includes a single-turn short circuit coil.

4. An electrical machine as recited in claim 3, wherein the single-turn short circuit coil is a circular cross-section wire.

5. An electrical machine as recited in claim 3, wherein the single-turn short circuit coil is a rectangular cross-section wire.

6. An electrical machine as recited in claim 1 or 2, wherein the or each flux repeller includes multiple turns.

7. An electrical machine as recited in claim 1, 2 or 6 wherein the or each flux repeller includes wound conductive tape.

8. An electric machine as recited in any one of claims 1 to 7, wherein the or each flux repeller includes a ferromagnetic core.

9. An electric machine as recited in any one of claims 1 to 7, wherein the or each flux repeller includes a non-ferromagnetic core.

10. An electrical machine as recited in claim 1 or 2, wherein the or each flux repeller includes a conductive solid bar.

11. An electrical machine as recited in claim 10, wherein the conductive solid bar has a rectangular cross-section.

**Fig. 1**

**Fig. 2**

110

**Fig. 3**

110

**Fig. 4**

210

**Fig. 5**

210

**Fig. 6**

310

**Fig. 7**

310

**Fig. 8**

404
406
407
410

**Fig. 9**

404
406
407
510

**Fig. 10**

*Fig. 11*

410

*Fig. 12*

604

606

608

614

612

*Fig. 13*

604

606

610

614

612

7